# EUROPEAN PATENT SPECIFICATION

(11) **EP 2 741 646 B1**
(45) Date of publication and mention of the grant of the patent: **13.01.2016**
(21) Application number: 12761653.0
(22) Date of filing: 08.08.2012
(51) Int. Cl.: A47J 31/46

(54) **MACHINE FOR THE DISPENSING OF ESPRESSO COFFEE**
MASCHINE ZUR AUSGABE VON ESPRESSO-KAFFEE
MACHINE SERVANT À DISTRIBUER DU CAFÉ EXPRESSO

(30) Priority: 09.08.2011 IT MO20110206
(43) Date of publication of application: 18.06.2014
(73) Proprietor: CMA Macchine per caffè S.r.l., 31058 Susegana (TV) (IT)
(72) Inventor: LEONARDI, Fausto, I-41124 Modena (IT)
(74) Representative: Gislon, Gabriele
(86) International application number: PCT/IB2012/001534
(87) International publication number: WO 2013/021270

(56) References cited:
- US-A1- 2004 000 237
- US-A1- 2004 177 760
- US-A1- 2011 174 162

## Description

### Technical Field

The present invention relates to a machine for the dispensing of espresso coffee.

### Background Art

Machines for the dispensing of espresso coffee of known type, most of which intended for professional use, generally comprise a supporting frame to which is associated at least a boiler for heating the water, one or more heat exchangers housed inside the boiler, and one or more coffee dispensing units connected to a related heat exchanger.

Such a machine is known from US2004/0000237

More in particular, the boiler has a heating element suitable for heating the water contained inside it and the exchangers, which receive heat by conduction from the boiler, are suitable for maintaining the temperature and the pressure of the water within an optimum range for the correct dispensing of the coffee.

As is known in fact, the water which is used to obtain the espresso coffee is that contained in the heat exchanger.

The machine can also be fitted with a hot water dispensing unit and with a steam dispensing unit, both connected to the boiler.

These coffee machines generally have a connection to the water mains, which is then connected to the boiler and to the heat exchanger by means of an inlet hydraulic circuit.

In the same way, the connection of the boiler and of the exchanger to the dispensing units is also made by means of an outlet hydraulic circuit.

The outlet hydraulic circuit of the coffee machines of known type comprises a plurality of pipes for connection of the boiler and exchanger to the dispensing units, as well as a plurality of valves and sensors of various types, such as level sensors, pressure sensors, etc...

Each pipe is individual, generally made of copper and shaped from time to time depending on available overall dimensions.

To the pipes required to convey the water and steam are added the wires for making the power connections.

These coffee machines of known type have a number of drawbacks.

They are in fact considerably complicated in terms of construction and maintenance.

In fact, the assembly of the outlet hydraulic circuit is particularly difficult considering the high number of pipes which have to be assembled and the little room at disposal.

Once assembly has been completed, the various pipes intersect one another to form a finely-knit network of pipes, making any subsequent maintenance operations very complicated.

Another drawback of coffee machines of known type consists in the high number of components to be managed. The possibility of a breakage or a malfunction of a component does in fact increase in accordance with the number of parts used. Furthermore, the complex network of pipes defined at the end of the assembly operation can make certain components hard to reach, consequently, replacing a damaged element can also call for the removal of other components which are operating perfectly.

Again, the components used are generally different the one from the other, which results in the need to also use a plurality of tools of various types for assembly or maintenance.

The high number of component parts used also complicates the management of warehouse stocks and spare parts.

The result is therefore that the assembly and maintenance stages are considerably complex and very much correlated to the experience and capacity of the operator who performs them.

Last but not least, as can be easily appreciated, the complexity of these machines inevitably affects the end cost of the product, which is also further increased by the material used for the hydraulic pipes, generally copper.

The use of copper for food uses, furthermore, is strongly not recommended in some countries due to the possible release of toxic or harmful substances. Another drawback of machines of known type consists of scale which, with use, penetrates the inlet and outlet circuits, obstructing the relative pipes and causing the malfunction of the machines themselves.

### Description of the Invention

The main aim of the present invention is to provide a machine for dispensing espresso coffee, the outlet circuit of which is considerably simpler, both from a maintenance and construction viewpoint, than the machines of known type. Within this aim, one object of the present invention is to considerably reduce the number of pieces used to make the outlet hydraulic circuit, so as to ensure easier assembly, subsequent maintenance operations and management of warehouse stocks, and reduce the risk of breakages or malfunctions, etc...

One object of the present invention is therefore to best optimize the room at disposal, making the machine "cleaner", or more easily accessible both during the assembly and maintenance stages and during normal operation.

Another object of the present invention is as far as possible to free the correct assembly of the machine from the skills and experience of the operator who performs the operation.

Yet another object of the present invention is to ensure the easier use of materials other than copper to make the hydraulic connections.

Not the last object of the present invention is to considerably cut the costs required for manufacture and maintenance compared to the machines of known type.

Yet another object is to provide a machine which is more resistant to scale and which, therefore, requires fewer maintenance jobs compared to the machines of known type.

Another object of the present invention is to provide a machine for dispensing espresso coffee which allows to overcome the mentioned drawbacks of the state of the art in the ambit of a simple, rational, easy and effective to use as well as low cost solution.

The above objects are achieved by the present machine for the dispensing of espresso coffee, comprising:
- at least a boiler, associable with a bearing structure, for the containment and heating of water;
- at least a container suitable for containing water for the dispensing of coffee;
- at least an inlet hydraulic circuit suitable for connecting said boiler and said container to a water feeding line;
- at least a coffee dispensing unit;
- at least an outlet hydraulic circuit suitable for connecting at least said container to said coffee dispensing unit;
and characterized by the fact that said outlet hydraulic circuit comprises at least a one-piece outlet block placed between said boiler and said coffee dispensing unit and in which are predefined at least a water dispensing channel, communicating at one extremity with said container and at the other extremity with said coffee dispensing unit, and at least one between at least a hot water delivery channel, communicating at one extremity with said boiler and at the other extremity with a hot water dispensing unit, and at least a steam emission channel, communicating at one extremity with said boiler and at the other extremity with a steam dispensing unit.

### Brief Description of the Invention

Other characteristics and advantages of the present invention will become more evident from the description of a preferred, but not sole, embodiment of a machine for the dispensing of espresso coffee, illustrated purely as an example but not limited to the annexed drawings in which:

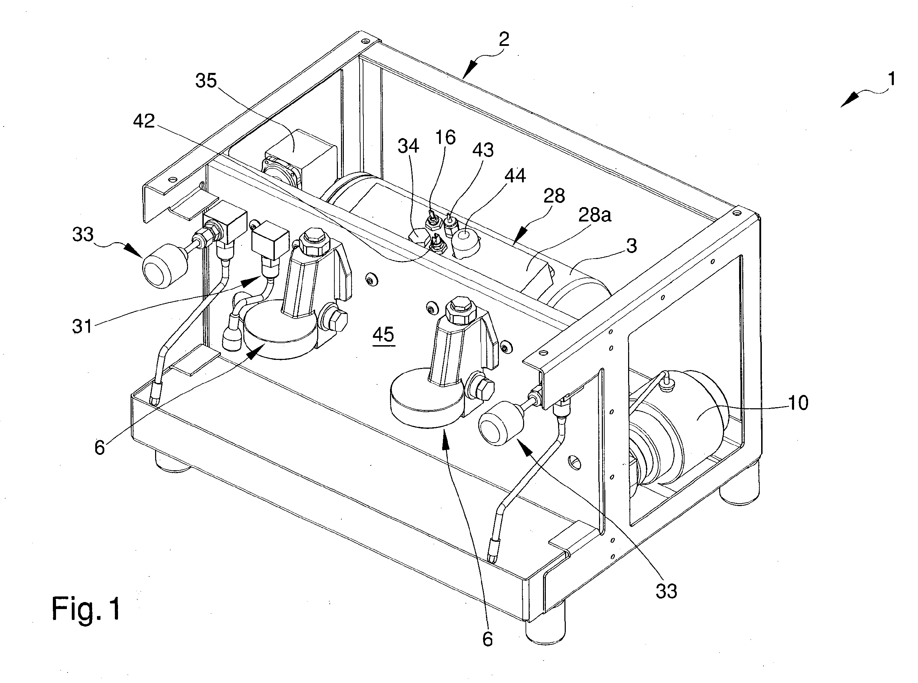

figure 1 is an axonometric front view of a machine according to the invention;

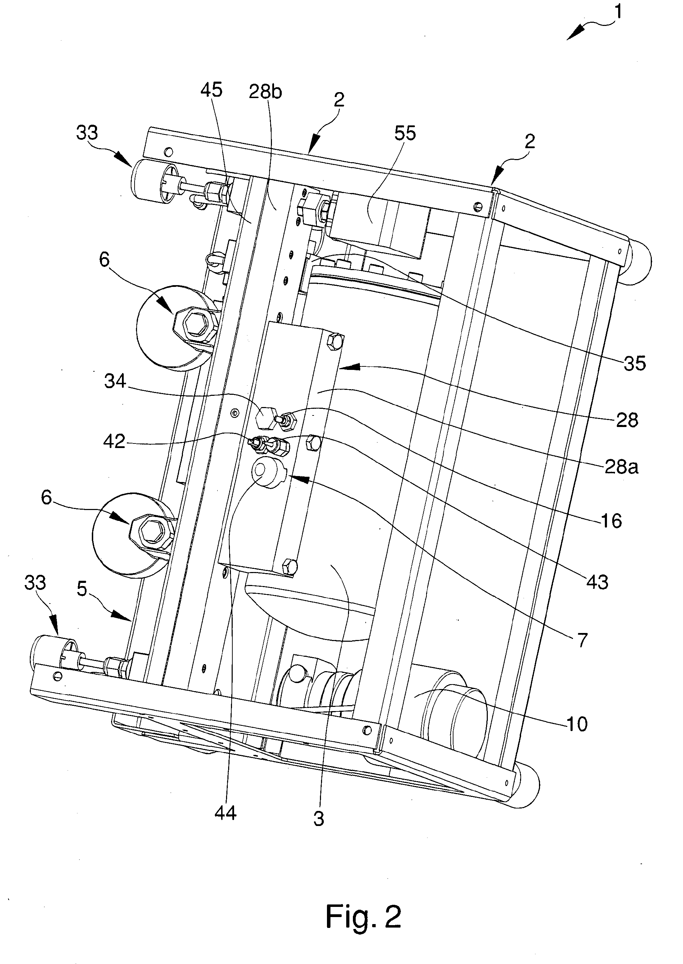

figure 2 is an axonometric rear view of the machine of figure 1;

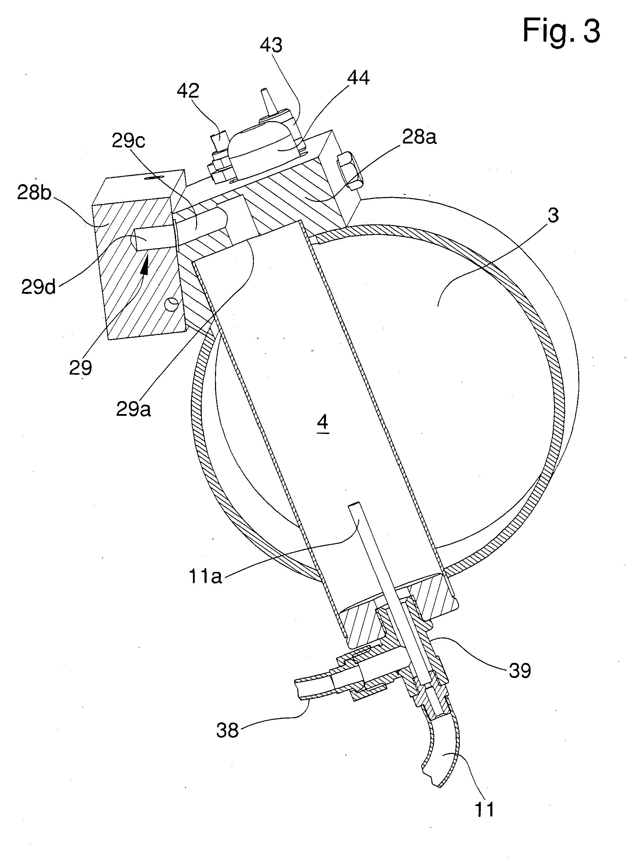

figure 3 is a section view of a detail of a machine according to the invention;

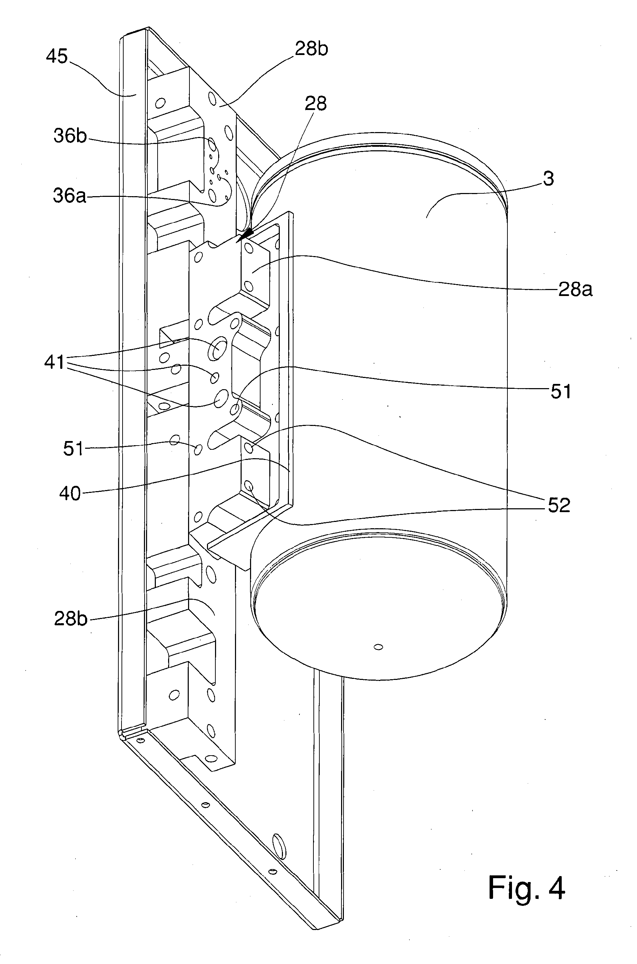

figure 4 is an axonometric view of the one-piece outlet block of a machine according to the invention associated with the relative boiler;

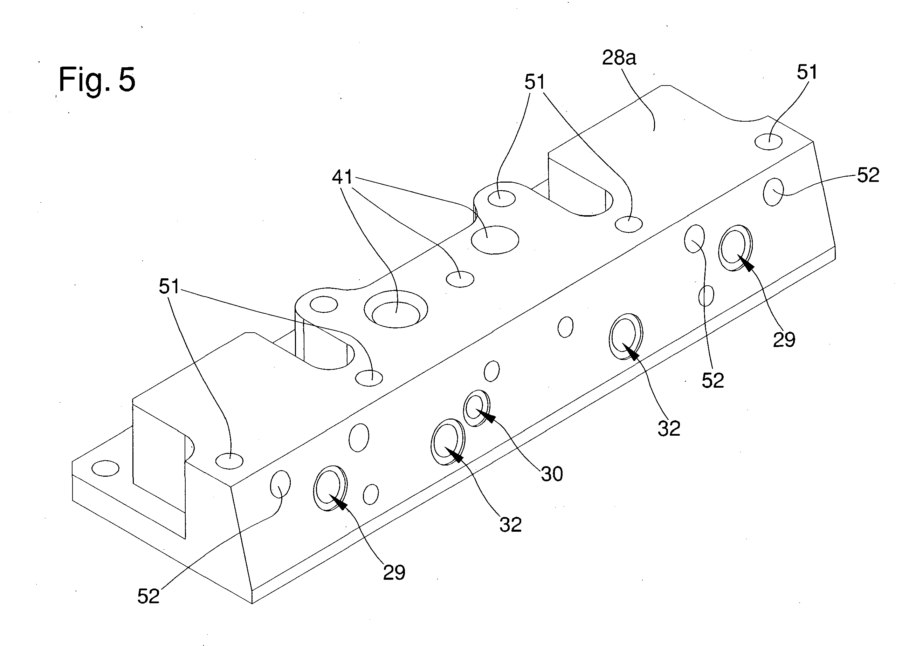

figure 5 is an axonometric view of the first block of the one-piece outlet block of figure 4;

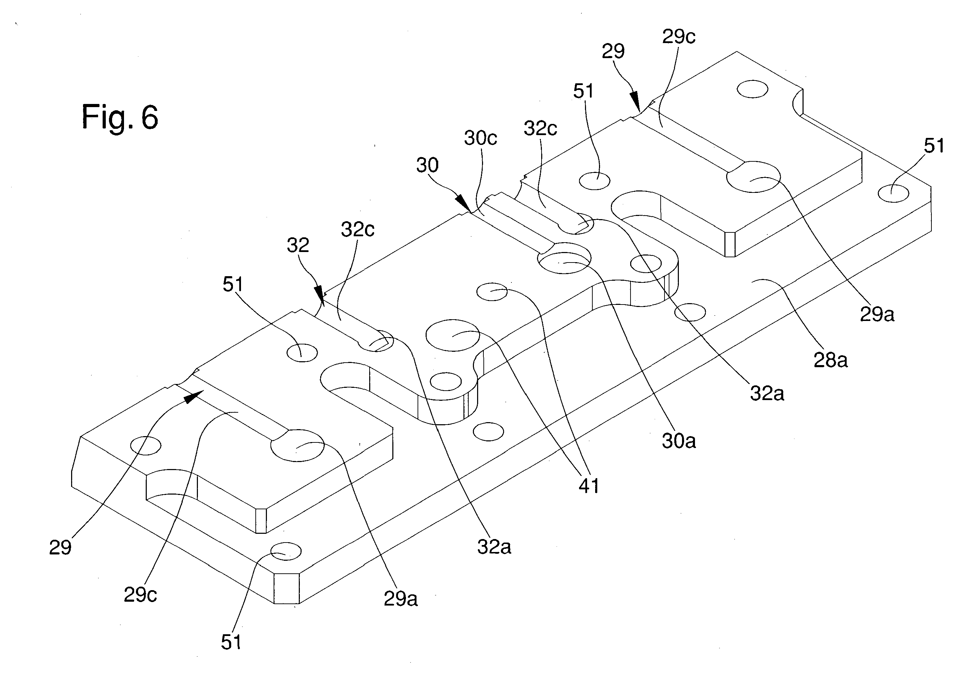

figure 6 is a section view of the first block of figure 5;

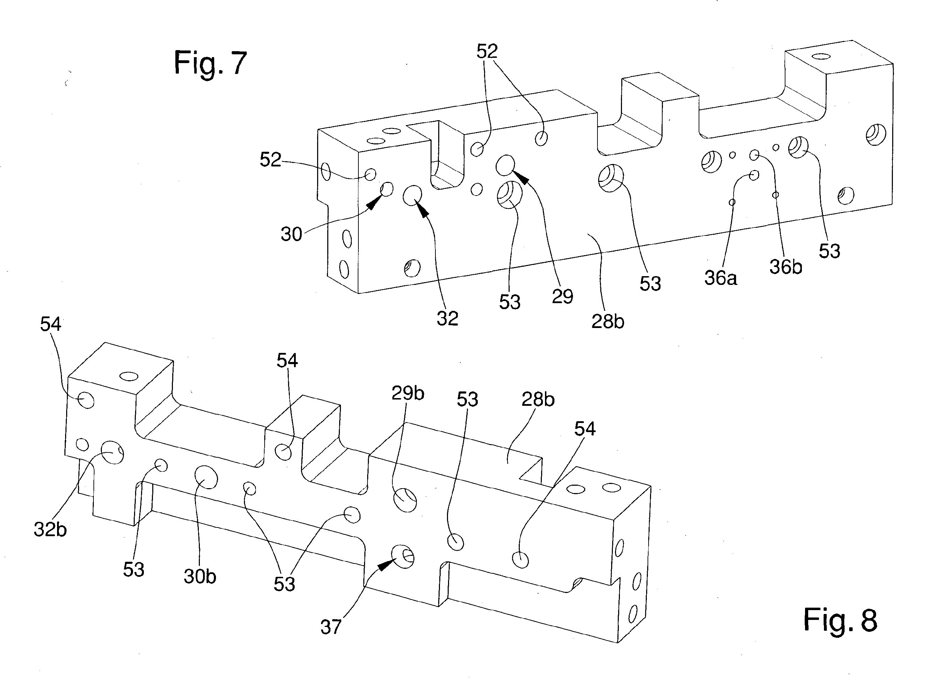

figure 7 is a first axonometric view of a second block of the one-piece outlet block of figure 4;
figure 8 is a second axonometric view of the second block of figure 7;

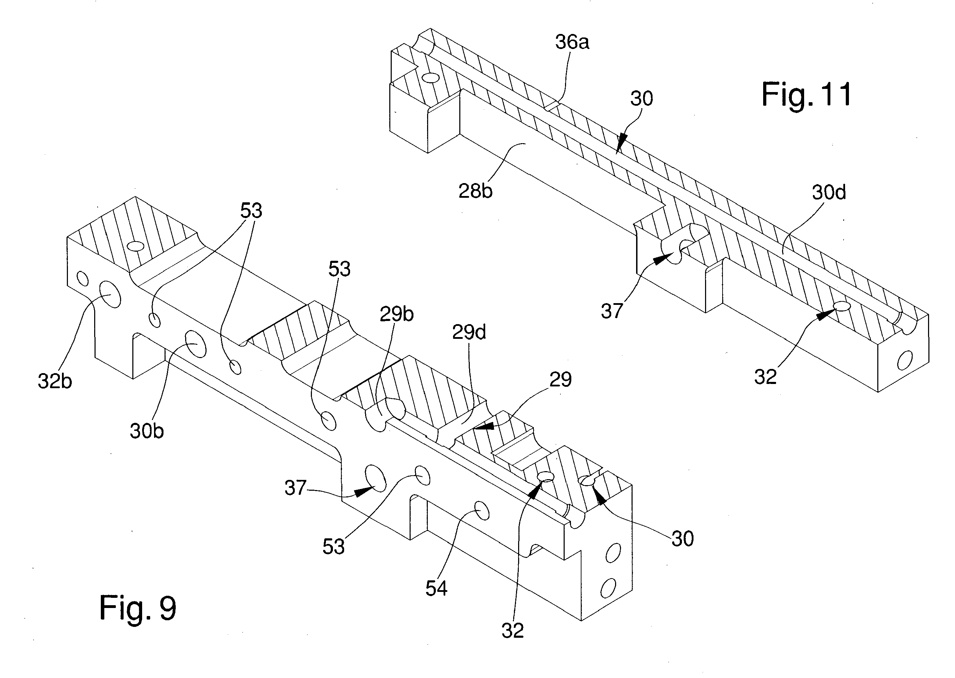

figure 9 is a first section of the second block of figure 7;

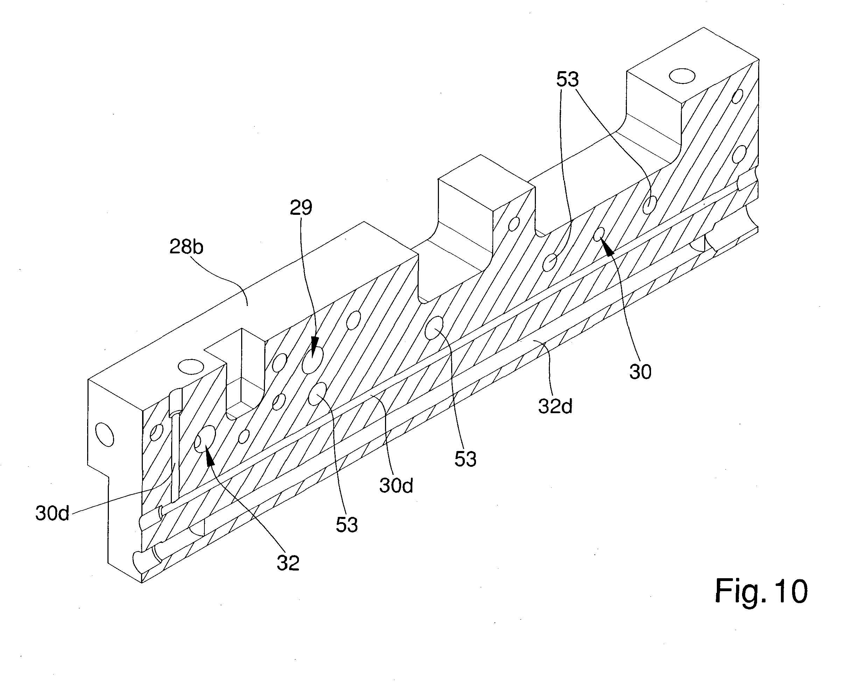

figure 10 is a second section of the second block of figure 7;
figure 11 is a third section of the second block of figure 7.

### Embodiments of the Invention

With particular reference to such figures, globally indicated by 1 is a machine for the dispensing of espresso coffee.

The machine 1 comprises at least one boiler suitable for containing and heating the water, at least one container 4 suitable for containing the water for dispensing the coffee, at least one inlet hydraulic circuit 5 suitable for connecting the boiler 3 and the container 4 to a water feeding line, and at least one coffee dispensing unit 6 connected to the container 4 by means of an outlet hydraulic circuit 7.

Suitably, the machine 1 comprises a bearing structure 2 and the boiler 3 is associated with such structure 2.

The water feeding line generally consists of the water mains.

More in particular, the boiler 3 comprises one container for the water coming from the feeding line and at least one heating element, generally of the electric or gas type and not shown in the illustrations, suitable for heating the water collected in the container itself. The heating element can be arranged inside this container, especially in the case of an electrical heating element, or outside it, especially in the case of a gas heating element.

This heating element is operatively connected to a pressure switch 55 in turn connected to the boiler 3 and suitable for changing the temperature of same according to the pressure detected inside the boiler 3. The pressure switch 55 thus triggers on the heating element so as to keep a more or less constant pressure inside the boiler 3.

The volume defined by the container 4 is separate from that delimited by the boiler 3.

In the embodiment shown in the illustrations, the container 4 is of the type of an exchanger contained at least partially in the boiler 3 and the water collected inside it receives heat by conduction from the water contained in the boiler itself. Alternative embodiments cannot however be ruled out wherein the container 4 is placed outside the boiler 3 and the water contained inside it arrives from the boiler itself or is heated by means of an independent heat source.

The container 4 is therefore suitable for keeping the water within an optimum temperature and pressure range for the correct dispensing of the espresso coffee. The number of containers 4 is equal to the number of coffee dispensing units 6. Advantageously, the inlet hydraulic circuit 5 comprises one or more pipes, not shown in the illustrations, for the transport of water coming from the feeding line towards the boiler 3 and/or towards the container 4 and comprises at least one pump 10 connected at one extremity to the feeding line and at the other extremity to one or more of such pipes.

In the embodiment shown in the illustration, the machine 1 comprises two containers 4 and the inlet circuit 5 is suitable for connecting each of said containers 4 to the water feeding line.

According to the invention, the outlet hydraulic circuit 7, hereinafter "outlet circuit 7", comprises at least a one-piece outlet block 28, hereinafter "outlet block 28", placed between the boiler 3 and the coffee dispensing unit 6. In the outlet block 28 is predetermined at least one dispensing channel 29, communicating at one extremity with a relative container 4 and at the other extremity with the corresponding coffee dispensing unit 6, and at least one between a hot water delivery channel 30, communicating at one extremity with the boiler 3 and at the other extremity with a hot water dispensing unit 31, and a steam emission channel 32, communicating at one extremity with the boiler 3 and at the other extremity with a steam dispensing unit 33.

Preferably, the outlet block 28 comprises at least one dispensing channel 29, at least one delivery channel 30 and at least one emission channel 32.

In the embodiment shown in the illustrations, the outlet block 28 therefore has two dispensing channels 29, each of which communicates directly with the relative container 4 on one side and with the corresponding coffee dispensing unit 6 on the other side. The outlet block 28 also comprises two steam emission channels 32 and a hot water delivery channel 30.

To the technician in the sector it appears obvious that the dispensing channels 29, the delivery channels 30 and the emission channels 32 are as many in number as the respective dispensing units 6, 31 and 33.

Advantageously, each channel 29, 30 and 32 has at least one relative first port 29a, 30a and 32a communicating directly with the relative container 4 or with the boiler 3 and at least one relative second port 29b, 30b and 32b communicating directly with the corresponding dispensing unit 6, 31 and 33. The term "communicating directly" is used here to mean that between the elements to which reference is made no further connection element is placed. Suitably, along the delivery channel 30, a pipe for picking up the hot water is fitted which protrudes from the relative first port 30a and extends inside the boiler 3.

Along the delivery channel 30 is also placed a solenoid valve 35 associated removable with the outlet block 28 and suitable for preventing/allowing the flow of hot water towards the dispensing unit 31. More in particular, the delivery channel 31 also has two further openings, of which one inlet opening 36a and one outlet opening 36b, placed between the first and the second ports 30a and 30b and communicating with the solenoid valve 35.

The outlet block 28 also comprises at least one backflow duct 37 for each container 4, separate from the relative dispensing channel 29 and communicating at one extremity with the relative coffee dispensing unit 6 and at the other extremity with the corresponding container 4.

More in particular, each coffee dispensing unit 6 comprises a solenoid valve which can be operated to allow dispensing the coffee and therefore the flow of water inside it. Such solenoid valve, not visible in detail in the illustrations, is placed in communication with the relative dispensing channel 29 and with the relative backflow duct 37, inside which the water is made to re-circulate in the event of such solenoid valve being closed.

The backflow duct 37 is then connected to the container by means of a pipe 38. Preferably, each container 4 has a connector 39 wherein run the pipes of the inlet circuit 5, suitable for connecting the container itself to the water feeding line, and the pipes 38 coming from the outlet block 28.

The outlet block 28 is associated removable with the boiler 3 and with the dispensing units 6, 31 and 33, for example by means of threaded connection means. The outlet block 28 therefore comprises a plurality of holes 51 for housing corresponding threaded elements suitable for interacting with the boiler 3 to make the reciprocal connection.

More in detail, the machine 1 comprises a supporting plate 40, fastened integral to the boiler 3 and defining a housing seat for the outlet block 28. The threaded elements fitted in the holes 51 are suitable for engaging with corresponding holes defined in the plate 40.

Advantageously, the outlet block 28 comprises at least one seat 41 for housing at least one between the level sensor 16, a supporting element 34 for supporting the hot-water pickup pipe, a pressure sensor 42, an indicator valve 43 suitable for signalling the presence of pressure inside the boiler 3 and a safety valve 44. Preferably, the outlet block 28 has a plurality of seats 41 for housing the level sensor 16, the supporting element 34, the pressure sensor 42, the indicator valve 43 and the safety valve 44. Suitably, the seat 41 wherein is fitted the supporting element 34 is communicating with the delivery channel 30.

In the preferred embodiment shown in the illustrations, the outlet block 28 comprises at least a first block 28a associated with the boiler 3 and at least a second block 28b associated with one or more of the dispensing units 6, 31 and 33, where the first and the second units 28a and 28b are directly associated with each other in a removable way. The first and the second blocks 28a and 28b therefore have a plurality of relative holes 52 interlinked the one with the other by means of the connection elements not visible in detail in the illustrations. The second unit 28b also comprises a plurality of holes 53 suitable for housing corresponding connection elements for connection to the dispensing units 6, 31 and 33.

At least one of the channels 29, 30 and 32, preferably each of them, has at least one relative first section 29c, 30c and 32c defined in the first block 28a and comprising the relative first port 29a, 30a and 32a and a relative second section 29d, 30d and 32d defined in the second block 28b and comprising the relative second port 29b, 30b and 32b.

The embodiment shown in the illustrations has a first block 28a and two second blocks 28b, where each of such second blocks 28b is suitable for connecting the first block 28a to relative dispensing units 6, 31 and 33.

More in detail, in one of the second blocks 28b are predefined the second sections 29d, 30d and 32d of one of the dispensing channels 29, of one of the emission channels 32 and of the delivery channel 30, while in the other are predefined the second sections 29d and 32d of the other dispensing channel 29 and of the other emission channel 32. The openings 36a and 36b for the connection to the solenoid valve 35 are defined along the second section 30d of the delivery channel 30 defined in the relative second block 28b.

Alternative embodiments cannot however be ruled out wherein the outlet block 28 has just one second block 28b suitable for connecting the first block 28a to all the dispensing units 6, 31 and 33.

As can be seen in the illustrations 4 and 5, the seats 41 are defined in the first block 28a while the backflow ducts 37 are defined in the relative second blocks 28b. Alternative embodiments cannot however be ruled out wherein the backflow ducts 37 also have a relative first section defined in the first block 28a and a relative second section defined in the second block 28b.

Suitably, the second blocks 28b are associated removable, not only with the first block 28a, but also with a supporting wall 45 of the structure 2, with which are also associated the dispensing units 6, 31 and 33. More in particular, the second blocks 28b comprise a plurality of holes 54 suitable for housing corresponding connection elements for connecting to the wall 45.

In the embodiment shown in the illustrations 1 and 2, the wall 45 is therefore suitable for supporting the weight of the boiler 3, of the outlet block 28 and of the dispensing units 6, 31 and 33.

The first and the second blocks 28a and 28b are made preferably of aluminium for food use or treated for such use.

Advantageously, the machine 1 also comprises an electric circuit, control means for controlling such electric circuit and operating means for operating one or more dispensing units 6, 31 and 33.

More in detail, the control means comprise at least one switch positionable in three different work positions, where in the first it interrupts the electric circuit and prevents the circulation of the current, in the second intervenes on the inlet circuit 5 to allow the boiler 3 to be filled and in the third also supplies the heating element of the boiler itself and the dispensing units 6, 31 and 33, as well as the relative operating means. In the event of the heating element being of the gas type, it can be operated by means of control means distinct from the switch. The outlet block 28, if made of a light alloy such as aluminium, can be treated with a surface coating with the addition of silver ions according to what is described and claimed in the patent EP1207220. Such treatment gives the outlet block 28 anti-bacterial, anti-mildew, anti-corrosion and anti-scale properties and increases resistance to abrasive wear, improving anti-stick and sliding, increases heat conductivity and heat dispersion and gives greater mechanical strength. The operation of the machine according to the invention is the following. When the switch is in the first position, the machine is off and, therefore, no current circulates inside it in the electric circuit.

With the switch in this position, the inlet circuit 5 allows in any case water to be introduced into the boiler 3 so as, in the event of the heating element being composed of an electric heating element inside the container defined by the boiler, to prevent such heating element, when operated, from overheating to the point of melting.

Subsequently, the machine 1 is switched on, moving the switch to the second operating position, wherein current is supplied to the electric circuit but not to the heating element.

In this operating condition, the inlet circuit 5 allows the boiler 3 and the containers 4 to be filled.

The water contained in the boiler 3 and in the containers 4 is still cold and, therefore, not suitable for dispensing coffee.

By moving the switch to the third operating position, the operation is started of the heating element and, therefore, also the heating of the water contained inside the boiler 3 and the consequent increase in pressure needed to obtain the convective movement of water between the containers 4 and the coffee dispensing units 6, as explained below in greater detail. As has been said above, due to the effect of conduction, the water contained in the containers 2 also heats up.

More in particular, the hotter part of the water contained in the containers 4 collects naturally in their upper part and enters the dispensing channel 29. During this journey, the water cools down and, because the solenoid valve of the relative coffee dispensing unit 6 is closed at this stage, returns into the container 4 passing through the backflow duct 37. This way, a convective type movement of the water is obtained inside the machine 1.

At the time of wanting to dispense coffee, the user intervenes on the starting means which, by commanding the pump 10, convey more water, cold and at high pressure, inside the inlet circuit 5.

The water entering the containers 4 causes an increase in pressure inside these and the consequent flow of the water contained in the relative dispensing channels 29 and in the relative backflow ducts 37 towards the corresponding coffee dispensing units 6. The mixing of the two flows of water coming from the dispensing channel 29 and from the backflow duct 37 allows reaching the optimum temperature and condensing the steam present. The coffee dispensing units 6 now have their respective solenoid valves open and thus allow the water to flow through and the consequent dispensing of the coffee.

The operation of the machine 1 for the dispensing of steam or hot water is immediately understandable by a technician in the sector.

In fact, by intervening on the starting means, the user can open the solenoid valve 35 arranged along the delivery channel 30, thereby allowing the dispensing of the hot water; the opening of the solenoid valve 35 causes the return of hot water from the boiler 3 by means of the pickup pipe supported by the first block 28b.

In the same way, the steam dispensing unit 33 can be fitted with a relative solenoid valve controllable by means of the starting means or can be fitted with a manual-operating tap to allow the steam to escape.

It has in fact been ascertained how the described invention achieves the proposed objects and in particular the fact is underscored that the presence of the one-piece outlet block permits considerably reducing the components used to connect the boiler and the exchanger to the water feeding line.

The outlet block, in fact, allows considerably simplifying the assembly and maintenance operations, thus cutting the times required for their performance and the relative costs related to them.

The reduction in the number of components used also allows proportionately reducing the risk of breakages or malfunctions and makes managing warehouse stocks considerably easier.

The assembly of the machine according to the invention is also made easier by the fact that the one-piece blocks can be preassembled separately from the other components and fitted subsequently.

## Claims

1. Machine (1) for the dispensing of espresso coffee, comprising:
- at least a boiler (3), associable with a bearing structure (2), for the containment and heating of water;
- at least a container (4) suitable for containing water for the dispensing of coffee;
- at least an inlet hydraulic circuit (5) suitable for connecting said boiler (3) and said container (4) to a water feeding line;
- at least a coffee dispensing unit (6);
- at least an outlet hydraulic circuit (7) suitable for connecting at least said container (4) to said coffee dispensing unit (6);
**characterized by** the fact that said outlet hydraulic circuit (7) comprises at least a one-piece outlet block (28) placed between said boiler (3) and said coffee dispensing unit (6) and in which are predefined at least a water dispensing channel (29), communicating at one extremity with said container (4) and at the other extremity with said coffee dispensing unit (6), and at least one between at least a hot water delivery channel (30), communicating at one extremity with said boiler (3) and at the other extremity with a hot water dispensing unit (31), and at least a steam emission channel (32), communicating at one extremity with said boiler (3) and at the other extremity with a steam dispensing unit (33).

2. Machine (1) according to claim 1, **characterized by** the fact that at least one of said channels (29, 30, 32) has at least a first port (29a, 30a, 32a) communicating directly with said container (4) or with said boiler (3) and at least a second port (29b, 30b, 32b) communicating directly with the relevant dispensing unit (6, 31, 33).

3. Machine (1) according to claim 1 or 2, **characterized by** the fact that in said one-piece outlet block (28) is predefined at least a water backflow duct (37), separate from said dispensing channel (29) and communicating at one extremity with said coffee dispensing unit (6) and at the other extremity with said container (4).

4. Machine (1) according to one or more of the preceding claims, **characterized by** the fact that said one-piece outlet block (28) comprises at least a seat (41) for housing at least a sensor (16, 42) and/or at least a valve (43, 44) communicating with said boiler (3) or with said container (4).

5. Machine (1) according to one or more of the preceding claims, **characterized by** the fact that said at least one-piece outlet block (28) comprises at least a first block (28a) associated with said boiler and at least a second block (28b) associated with at least one of said dispensing units (6, 31, 33), said first and said second block (28a, 28b) being directly associated with each other in a removable way.

6. Machine (1) according to claim 5 or 6, **characterized by** the fact that at least one of said channels (29, 30, 32) has a relative first section (29c, 30c, 32c), defined in said first block (28a) and comprising the relative first port (29a, 30a, 32a), and a relative second section (29d, 30d, 32d), defined in said second block (28b) and comprising the relative second port (29b, 30b, 32b).

7. Machine (1) according to claim 5 or 6, **characterized by** the fact that said first block (28a) is associated in a removable way with said boiler (3) and that said second block (28b) is associated in a removable way with at least one of said dispensing units (6, 31, 33).

8. Machine (1) according to one or more of the claims from 3 to 7, **characterized by** the fact that said seats (41) are defined in said first block (28a) and that said backflow duct (37) is defined in said second block (28b).

## Patentansprüche

1. Maschine (1) für die Ausgabe von Espresso-Kaffee, umfassend:
- mindestens einen Kessel (3), zuordenbar einer Lagerstruktur (2), für die Lagerung und das Erhitzen von Wasser;
- mindestens einen Behälter (4), geeignet zum Lagern von Wasser für die Ausgabe von Kaffee;
- mindestens einen Einlass-Hydraulikkreislauf (5), geeignet zum Verbinden des Kessels (3) und des Behälters (4) mit einer Wasserzufuhrleitung;
- mindestens eine Kaffeeausgabeeinheit (6);
- mindestens einen Auslass-Hydraulikkreislauf (7), geeignet zum Verbinden mindestens des Behälters (4) mit der Kaffeeausgabeeinheit (6);
**dadurch gekennzeichnet, dass** der der Auslass-Hydraulikkreislauf (7) mindestens einen einstückigen Auslassblock (28) umfasst, welcher zwischen dem Kessel (3) und der Kaffeeausgabeeinheit (6) plaziert ist und innerhalb dessen mindestens ein Wasserausgabekanal (29), der an einem Ende mit dem Behälter (4) und an dem anderen Ende mit der Kaffeeausgabeeinheit (6) kommuniziert, und mindestens eines von mindestens ein Heizwasserversorgungskanal (30), der an einem Ende mit dem Kessel (3) und an dem anderen Ende mit einer Heißwasserausgabeeinheit (31) kommuniziert, und mindestens ein Dampfemissionskanal (32), der an einem Ende mit dem Kessel (3) und an dem anderen Ende mit einer Dampfausgabeeinheit (33) kommuniziert, vordefiniert sind.

2. Maschine (1) gemäß Anspruch 1, **dadurch gekennzeichnet, dass** mindestens einer der Kanäle (29, 30, 32) mindestens eine erste Öffnung (29a, 30a, 32a) aufweist, die direkt mit dem Behälter (4) oder mit dem Kessel (3) kommuniziert, und mindestens eine zweite Öffnung (29b, 30b, 32b) aufweist, die direkt mit der entsprechenden Ausgabeeinheit (6, 31, 33) kommuniziert.

3. Maschine (1) gemäß Anspruch 1 oder 2, **dadurch gekennzeichnet, dass** in dem einstückigen Auslassblock (28) mindestens eine Wasserrückflussleitung (37) vordefiniert ist, welche von dem Ausgabekanal (29) getrennt ist und an einem Ende mit der Kaffeeausgabeeinheit (6) und an dem anderen Ende mit dem Behälter (4) kommuniziert.

4. Maschine (1) gemäß einem oder mehreren der vorhergehenden Ansprüche, **dadurch gekennzeichnet, dass** der einstückige Auslassblock (28) mindestens einen Sitz (41) zur Aufnahme von mindestens einem Sensor (16, 42) und / oder von mindestens einem Ventil (43, 44) umfasst, kommunizierend mit dem Kessel (3) oder mit dem Behälter (4).

5. Maschine (1) gemäß einem oder mehreren der vorhergehenden Ansprüche, **dadurch gekennzeichnet, dass** der mindestens eine einstückige Auslassblock (28) mindestens einen ersten Block (28a) umfasst, der dem Kessel zugeordnet ist, und mindestens einen zweiter Block (28b) umfasst, der mindestens einer der Ausgabeeinheiten (6, 31, 33) zugeordnet ist, wobei der erste und der zweite Block (28a, 28b) direkt einander in einer lösbarer Weise zugeordnet sind.

6. Maschine (1) gemäß Anspruch 5 oder 6, **dadurch gekennzeichnet, dass** mindestens einer der Kanäle (29, 30, 32) einen relativen ersten Abschnitt (29c, 30c, 32c) aufweist, welcher in dem ersten Block (28a) definiert ist und die relative erste Öffnung (29a, 30a, 32a) umfasst, und einen relativen zweiten Abschnitt (29d, 30d, 32d) umfasst, der in dem zweiten Block (28b) definiert ist und die relative zweite Öffnung (29b, 30b, 32b) umfasst.

7. Maschine (1) gemäß Anspruch 5 oder 6, **dadurch gekennzeichnet, dass** der erste Block (28a) in einer lösbarer Weise dem Kessel (3) zugeordnet ist und dass der zweite Block (28b) in einer lösbarer Weise mindestens einer der Ausgabeeinheiten (6, 31, 33) zugeordnet ist.

8. Maschine (1) gemäß einem oder mehreren der Ansprüche 3 bis 7, **dadurch gekennzeichnet, dass** die Sitze (41) in dem ersten Block (28a) definiert sind und dass die Rückflussleitung (37) in dem zweiten Block (28b) definiert ist.

## Revendications

1. Machine (1) de distribution de café expresso, comprenant :
- au moins une bouilloire (3), pouvant être associée à une structure portante (2), pour contenir et chauffer de l'eau ;
- au moins un contenant (4) adapté pour contenir de l'eau pour la distribution de café ;
- au moins un circuit hydraulique d'admission (5) adapté pour raccorder ladite bouilloire (3) et ledit contenant (4) à une conduite d'alimentation en eau ;
- au moins une unité de distribution de café (6) ;
- au moins un circuit hydraulique de refoulement (7) adapté pour raccorder au moins ledit contenant (4) à ladite unité de distribution de café (6) ;
**caractérisée par le fait que** ledit circuit hydraulique de refoulement (7) comprend au moins un bloc de refoulement d'un seul tenant (28) placé entre ladite bouilloire (3) et ladite unité de distribution de café (6) et dans lequel sont prédéfinis au moins un canal de distribution d'eau (29), communiquant au niveau d'une extrémité avec ledit contenant (4) au niveau de l'autre extrémité avec ladite unité de distribution de café (6), et au moins l'un entre au moins un canal de délivrance d'eau chaude (30), communiquant au niveau d'une extrémité avec ladite bouilloire (3) et au niveau de l'autre extrémité avec une unité de distribution d'eau chaude (31), et au moins un canal d'émission de vapeur (32), communiquant au niveau d'une extrémité avec ladite bouilloire (3) et au niveau de l'autre extrémité avec une unité de distribution de vapeur (33).

2. Machine (1) selon la revendication 1, **caractérisée par le fait qu'**au moins l'un desdits canaux (29, 30, 32) a au moins une première lumière (29a, 30a, 32a) communiquant directement avec ledit contenant (4) ou avec ladite bouilloire (3) et au moins une seconde lumière (29b, 30b, 32b) communiquant directement avec l'unité de distribution concernée (6, 31, 33).

3. Machine (1) selon la revendication 1 ou 2, **caractérisée par le fait que** dans ledit bloc de refoulement d'un seul tenant (28), est prédéfini au moins un conduit de retour d'eau (37), séparé dudit canal de distribution (29) et communiquant au niveau d'une extrémité avec ladite unité de distribution de café (6) et au niveau de l'autre extrémité avec ledit contenant (4).

4. Machine (1) selon une ou plusieurs des revendications précédentes, **caractérisée par le fait que** ledit bloc de refoulement d'un seul tenant (28) comprend au moins un siège (41) destiné à loger au moins un capteur (16, 42) et/ou au moins une soupape (43, 44) communiquant avec ladite bouilloire (3) ou avec ledit contenant (4).

5. Machine (1) selon une ou plusieurs des revendications précédentes, **caractérisée par le fait que** ledit au moins un bloc de refoulement d'un seul tenant (28) comprend au moins un premier bloc (28a) associé à ladite bouilloire et au moins un second bloc (28b) associé à au moins l'une desdites unités de distribution (6, 31, 33), lesdits premier et second blocs (28a, 28b) étant directement associés l'un à l'autre de façon amovible.

6. Machine (1) selon la revendication 5 ou 6, **caractérisée par le fait qu'**au moins l'un desdits canaux (29, 30, 32) a une première section relative (29c, 30c, 32c), définie dans ledit premier bloc (28a) et comprenant la première lumière relative (29a, 30a, 32a) et une seconde section relative (29d, 30d, 32d), définie dans ledit second bloc (28b) et comprenant la seconde lumière relative (29b, 30b, 32b).

7. Machine (1) selon la revendication 5 ou 6, **caractérisée par le fait que** ledit premier bloc (28a) est associé de façon amovible à ladite bouilloire (3) et en ce que ledit second bloc (28b) est associé de façon amovible à au moins l'une desdites unités de distribution (6, 31, 33).

8. Machine (1) selon une ou plusieurs des revendications 3 à 7, **caractérisée par le fait que** lesdits sièges (41) sont définis dans ledit premier bloc (28a) et que ledit conduit de retour d'eau (37) est défini dans ledit second bloc (28b).
